# EUROPEAN PATENT APPLICATION

(11) **EP 4 439 366 A1**
(43) Date of publication of application: **02.10.2024**
(21) Application number: 23275054.7
(22) Date of filing: 31.03.2023
(51) Int. Cl.: G06F 21/72, G06F 21/75, G06F 21/86, H01L 23/00

(54) **A DEVICE FOR SECURE STORAGE OF DATA**

(71) Applicant: nCipher Security Limited, Cambridge CB1 2GA (GB)
(72) Inventor: BAKER, Kevin John, Cambridge, CB1 2GA (GB)
(74) Representative: Marks & Clerk LLP

(57) **Abstract**

A device, comprising:
a circuit board;
a first processing component comprising a first chip, the first processing component mounted on a first side of the circuit board with an active surface of the first chip facing towards the circuit board;
a second processing component comprising a second chip, the second processing component mounted on a second side of the circuit board with an active surface of the second chip facing towards the circuit board, wherein the second side of the circuit board is opposite to the first side of the circuit board, wherein the second processing component is mounted at least partially overlapping with the first processing component; and
a first tamper detection link provided through the circuit board and in the area of overlap between the first processing component and the second processing component.

## Description

### Field

The present disclosure relates to a device for secure storage of data, a method of operation of a device, and a method of manufacturing a device. In particular, the present disclosure relates to a device comprising tamper protection.

### Background

Various devices may be designed to store and perform operations with sensitive data. For example, a Hardware Security Module (HSM) is a device that securely stores and manages cryptographic keys, and performs a set of cryptographic operations, such as generating a cryptographic key, performing encryption and decryption, or performing digital signature and verification operations.

Such devices may comprise mechanisms that protect against a malicious third party tampering with the device. For example, various features of the device may provide tamper resistance. Various features of the device may provide tamper detection.

There is a continuing need to improve the security of such devices.

### Brief Description of the Figures

Devices and methods in accordance with non-limiting embodiments will now be described with reference to the accompanying figures in which:
Figure 1A is a schematic illustration showing a plan view of an example device;
Figure 1B is a schematic illustration showing a cross-sectional view of the device;
Figure 2A shows a schematic illustration of a plan view of a device according to an embodiment;
Figure 2B shows a cross-sectional view of the device;
Figure 2C shows a further cross-sectional view of the device;
Figure 2D shows a cross-sectional view of an example device;
Figure 2E shows an alternative arrangement of an example device;
Figure 2F shows a schematic illustration of the components and connections in the device;
Figure 3(a) shows a schematic illustration of an example SOC (System-on-a-Chip) Field Programmable Gate Array (FPGA);
Figure 3(b) shows a schematic illustration of an example tamper processor;
Figure 4A shows a schematic illustration of a cross-sectional view of a device according to another example;
Figure 4B shows a schematic illustration of a cross-sectional view of the device;
Figure 5A is a flow chart of an example method of operation of a device;
Figure 5B is a flow chart of an example method of operation of a device;
Figure 6 is a flow chart of an example method of manufacturing a device;
Figure 7a shows a cross-sectional view of a schematic illustration of a device according to an example;
Figure 7b is a schematic illustration showing a plan view of the device;
Figure 8a shows a cross-sectional view of a schematic illustration of a device according to an example;
Figure 8b is a schematic illustration showing a plan view of the device.

### Detailed Description

According to a first aspect, there is provided a device, comprising:
a circuit board;
a first processing component comprising a first chip, the first processing component mounted on a first side of the circuit board with an active surface of the first chip facing towards the circuit board;
a second processing component comprising a second chip, the second processing component mounted on a second side of the circuit board with an active surface of the second chip facing towards the circuit board, wherein the second side of the circuit board is opposite to the first side of the circuit board, wherein the second processing component is mounted at least partially overlapping with the first processing component; and
a first tamper detection link provided through the circuit board and in the area of overlap between the first processing component and the second processing component.

In one example, the second processing component is configured to monitor the first tamper detection link.

In one example, the second processing component is configured to store cryptographic material and to erase the cryptographic material in response to a detection on the first tamper detection link.

In one example, the device further comprises a power component configured to power the second processing component.

In one example the first tamper detection link comprises a first connection, a second connection and a conductive path on the first processing component.

In one example, the conductive path comprises a first pin, a second pin and a conductive connection between the first pin and the second pin on the first processing component.

In one example, the conductive path comprises a diode.

In one example, the second processing component is configured to detect an open circuit on the first tamper detection loop as indicating a tamper attempt.

In one example, the first connection comprises a first via hole in the circuit board and the second connection comprises a second via hole in the circuit board.

In one example, the first processing component comprises a Field Programmable Gate Array FPGA.

In one example, the first processing component is configured to erase cryptographic material in response to receiving an indication from the second processing component of a detection on the first tamper detection link.

In one example, the device further comprises a second tamper detection link provided through the circuit board and in the area inbetween the first processing component and the second processing component.

In one example, the first processing component is configured to monitor the second tamper detection link.

According to a further aspect, there is provided a method of operation of a device, comprising:
monitoring a first tamper detection link using a second processing component comprising a second chip, the second processing component mounted on a second side of a circuit board with an active surface of the second chip facing towards the circuit board, wherein the first tamper detection link is provided through the circuit board and in the area of overlap between the second processing component and a first processing component comprising a first chip, wherein the first processing component is mounted on a first side of the circuit board with an active surface of the first chip facing towards the circuit board, wherein the second side of the circuit board is opposite to the first side of the circuit board, and wherein the second processing component is mounted at least partially overlapping with the first processing component.

According to another aspect, there is provided a carrier medium comprising computer readable code configured to cause a computer to perform the method. According to another aspect, there is provided a non-transitory computer readable storage medium comprising program instructions stored thereon that are executable by a computer processor to perform the method. The method may be a computer-implemented method. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

According to another aspect, there is provided a method of manufacturing a device comprising:
manufacturing a circuit board comprising one or more sections of a first tamper detection link;
mounting a first processing component comprising a first chip on a first side of the circuit board with an active surface of the first chip facing towards the circuit board;
mounting a second processing component comprising a second chip on a second side of the circuit board with an active surface of the second chip facing towards the circuit board, wherein the second side of the circuit board is opposite to the first side of the circuit board, and wherein the second processing component is mounted at least partially overlapping with the first processing component; wherein mounting the first processing component and the second processing component comprises forming the first tamper detection link, wherein the first tamper detection link is provided through the circuit board and in the area of overlap between the first processing component and the second processing component.

Various devices may be designed to store and perform operations with sensitive data. For example, a Hardware Security Module (HSM) is a device that securely stores and manages cryptographic keys, and performs a set of cryptographic operations, such as generating a cryptographic key, performing encryption and decryption or performing digital signature and verification operations.

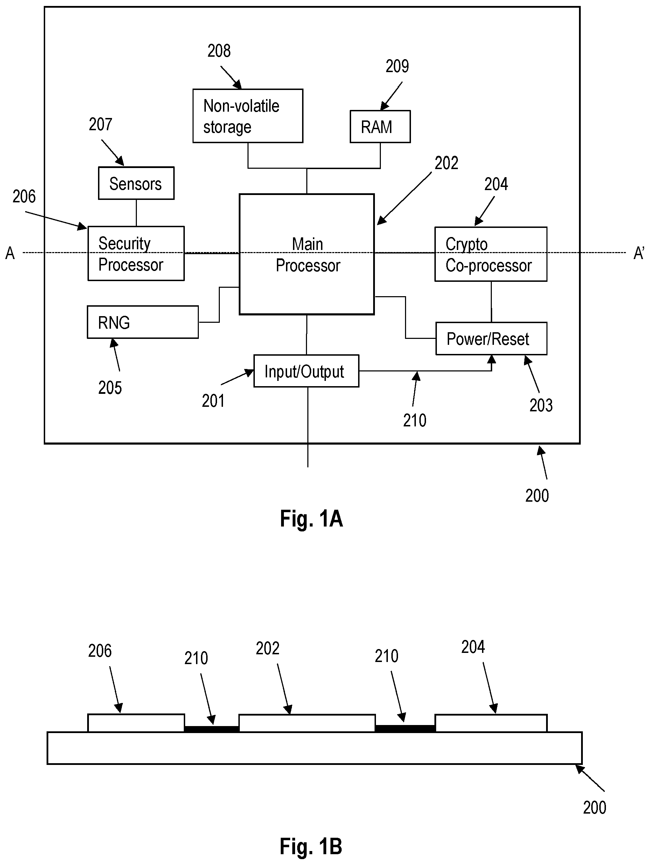

Figure 1A is a schematic illustration showing a plan view of an example HSM device. The HSM comprises a plurality of hardware components, including a main processor 202, non-volatile storage 208, random access memory (RAM) 209, crypto co-processor 204, power/reset component 203, input/output component 201, random number generator 205, tamper processor 206, and one or more sensors 207. Various components such as the main processor 202 and the tamper processor 206 are mounted on a first surface of a Printed Circuit Board (PCB) 200. The PCB 200 comprises electrical connections 210 for communicatively coupling various components to each other. These connections 210 may comprise traces, also referred to as tracks, on the first surface of the PCB 200.

The main processor 202 comprises a chip, comprising a set of electronic circuits on a surface of a single piece of semiconductor material. The surface of the chip on which the circuits are provided is referred to as the active surface. The main processor 202 may comprise a package comprising the chip. In this example, the main processor 202 is a Central Processing Unit (CPU). For example, the main processor 202 may be an NXP T1042 processor. The main processor 202 is mounted on the first surface of the PCB 200.

A user may store sensitive cryptographic material on the HSM. For example, one or more cryptographic application keys are associated with a user of the HSM device. The cryptographic application keys may be securely stored on the HSM. Alternatively, the cryptographic application keys may be encrypted with a master key and stored outside the HSM. The master key, or material that can be used to obtain the master key, is then securely stored inside the HSM. The crypto co-processor 204 performs various cryptographic functions in hardware, for example various standard encryption and decryption algorithms, and digital signature algorithms. The main processor 202 may offload various operations onto the crypto co-processor 204.

The tamper processor 206 is configured to detect an attempt to tamper with the device. The tamper processor 206 is configured to communicate with a plurality of sensors 207 located in the HSM. The sensors 207 are configured to monitor physical properties that may indicate an attempt to tamper with the HSM. The tamper processor 206 and the sensors 207 together provide tamper detection. The sensors may include one or more of: one or more temperature sensors (for example to monitor the temperature of the main processor 202 and/or the PCB 200), one or more voltage sensors and one or more current sensors. The tamper processor 206 is configured to detect an indication that the HSM is being or has been tampered with by monitoring the output of these sensors.

In use, the tamper processor 206 is configured to communicate with the main processor 202. The tamper processor 206 provides information indicating whether or not the security of the Hardware Security Module (HSM) has been compromised. For example, in response to receiving an indication from the tamper processor 206 that the HSM has been compromised, the main processor 202 is configured to suspend start up and delete stored cryptographic material.

Figure 1B is a schematic illustration showing a cross-sectional view of the HSM. In particular, Figure 1B shows a cross-section across line A-A' shown in Figure 1A. As can be seen from Figure 1B, the tamper processor 206 and the main processor 202 are located on the first surface of the PCB 200, in other words, the tamper processor 206 and the main processor 202 are provided on the same side of the PCB 200.

An attacker who has gained physical possession of the HSM could attempt to access the stored cryptographic material by performing probing onto the active surface of the chips, for example to disrupt the function of the tamper processor 206 or to access cryptographic material stored on the main processor 202. In particular, the circuitry may be vulnerable to tampering attempts made by a malicious party. For example, a malicious party could attempt to disable or counteract any chip-level tamper detection features.

Various security measures may be provided to mitigate against such an attack.

For example, further tamper detection may be implemented using a plurality of via holes in the PCB 200 forming a wall and/or serpentine conductive tracks formed on the first surface of the PCB 200 around areas requiring protection, such as around the main processor 202 and the tamper processor 206. A break or short in the tracking or wall of via holes is sensed by the tamper processor 206, indicating an attack. However, an attacker may attempt to circumvent such measures by linking out sections of the tracking or wall, providing a space to access the protected components.

Tamper resistance may be provided by including a protective layer over the hardware components. The layer may be formed of an epoxy resin. Epoxy resin layers provide good resistance to chemical and abrasion attacks for example. An attacker attempting to gain access to the components by removing the layer, for example by abrasion attacks (e.g. rubbing the surface with sand paper) or chemical attacks may destroy the hardware components in the process. However, while making the HSM more secure, the protection layer may also prevent a legitimate user from accessing components of the HSM for testing, debugging, repair or replacement for example. In this way, the lifespan or reliability of the HSM may be compromised.

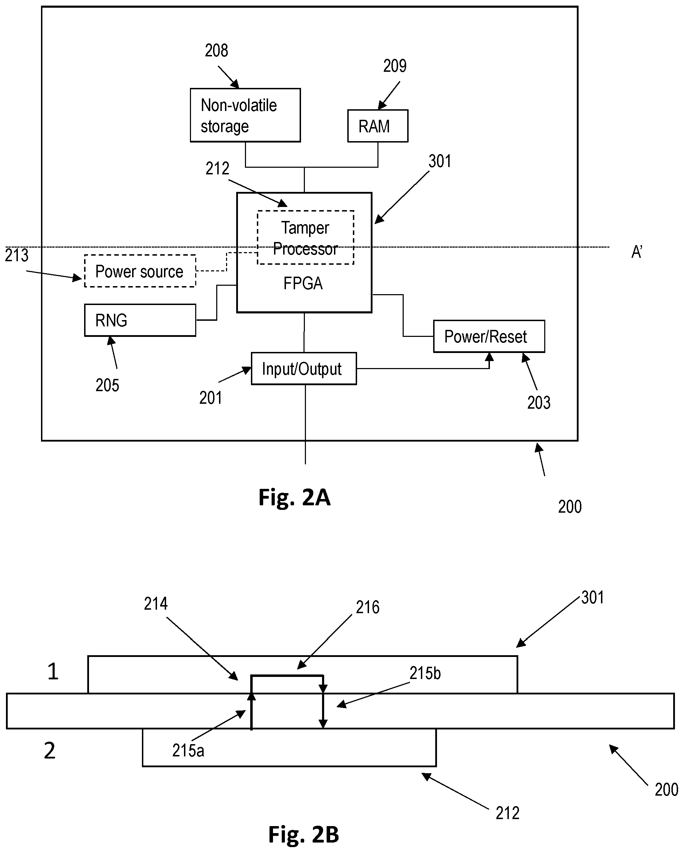

Figure 2A shows a schematic illustration of a plan view of a Hardware Security Module (HSM) device according to an embodiment.

The device comprises a PCB 200, a first processing component, which in this example is a main processor 301, and a second processing component 212, which in this example is a tamper processor 212.

In the device, the main processor 301 and the tamper processor 212 are flip chip mounted onto the PCB 200. Flip chip mounting places the active side of the chip facing the PCB 200, rather than facing upwards. By mounting the main processor 301 and the tamper processor 212 with the active side of the chips facing the PCB 200, tamper resistance is provided. In particular, to perform probing onto the silicon, and to defeat any chip-level tamper features, an attacker would need to remove the chip from the PCB 200 or drill through the PCB 200 to access the active surface of the chip.

Furthermore, the main processor 301 is mounted on a first surface of the PCB 200, whereas the tamper processor 212 is mounted on the opposite surface of the PCB 200 - the second surface. In particular, the main processor 301 comprises a first chip 301a and is mounted on a first side of the PCB 200 with an active surface of the first chip 301a facing towards the PCB 200. The tamper processor 212 comprises a second chip 212a, and is mounted on a second side of the PCB 200 with an active surface of the second chip 212a facing towards the PCB 200, wherein the second side of the PCB 200 is opposite to the first side of the PCB 200. The tamper processor 212 is mounted in a location that at least partly overlaps with the mounting location of the main processor 301. In this example, the mounting area of the tamper processor 212 is smaller than the mounting area of the main processor 301, and the mounting area of the tamper processor 212 is completely contained within the mounting area of the main processor 301. By placing the main processor 301 and tamper processor 212 on opposite sides of the PCB 200 and partly overlapping, further tamper resistance is provided, since it is more difficult for an attacker to gain access to the active surface of the main processor 301 or the tamper processor 212 without damaging the other component. In particular, it is made harder for an attacker to access the active surface of a chip by drilling through the PCB 200.

Furthermore, a tamper detection link 214 is provided from and to the tamper processor 212, routed via the main processor 301 circuitry. The main processor 301 and tamper processor 212 are placed on opposite sides of the PCB 200, with a tamper-detection connection 214 routed through the PCB 200 between the main processor 301 and the tamper processor 212. It is therefore made difficult for an attacker to gain access to the active surface of the main processor chip without triggering a tamper detection. In particular, unlike a track provided on the surface of the PCB 200 around the main processor 301, the tamper detection link 214 is provided between the main processor 301 and the tamper processor 212, through the PCB 200. The link is provided through the PCB 200 and in the area inbetween the main processor 301 and the tamper processor 212. It is therefore difficult for an attacker to link out sections of the tamper detection link 214 to access the main processor 301 without detection, since the tamper detection link 214 cannot be easily accessed. For example, where the PCB 200 is a multi-layer PCB, the tamper detection link 214 is provided through the PCB 200, and may include traces within the PCB 200. An attacker cannot prise apart the PCB layers without breaking the tamper detection link 214.

The tamper detection link 214 goes from and to the tamper processor 212, and is routed via the main processor 301 silicon, in other words, via the electronic circuitry provided on the active surface of the first chip 301a of the main processor 301. The tamper detection remains active when the main processor 301 is powered off. The tamper detection link 214 goes via the silicon on the main processor 301, so attempted removal of the main processor 301 is detected. The tamper detection link 214 comprises via holes, and optionally PCB traces, which are located in the small space between the main processor 301 and the tamper processor 212, such that an attempt to move the main processor 301 and the tamper processor 212 apart, for example by prising PCB layers apart, will break the tamper detection link 214. This arrangement constrains the space that an adversary has to attempt to disable the tamper detection link 214 to obtain access to the active surface on the main processor 301 and the tamper processor 212.

The above-described features may provide increased security. Furthermore, the inclusion of further tamper resistance measures such as providing a protective layer may be avoided, meaning that the above-described features may provide a reduced manufacturing cost.

Further detailed description of the HSM device and the components will now be provided.

The Hardware Security Module (HSM) comprises an Input/Output (IO) connector 201. The IO connector 201 is communicatively coupled to the main processor 301 and is configured to act as an interface, through which data is communicated, between the main processor 301 and an external system. The Hardware Security Module (HSM) in this example is configured to be communicatively coupled to a computer or server device in an external system through the Input/Output (IO) connector 201. For example, the Hardware Security Module (HSM) can be a PCI express card, which can be directly plugged into the computer or server device. In this case the Input/Output (IO) connector is a PCIe connector. In use, the Hardware Security Module (HSM) receives user requests through the Input-Output (IO) connector 201. The requests may comprise commands to perform certain cryptographic operations. The Input-Output (IO) connector 201 is communicatively coupled to the main processor 301 by an electrically conductive connection 210, which may comprise a trace on the PCB 200.

The Hardware Security Module (HSM) further comprises non-volatile memory 208 and working memory comprising Random Access Memory (RAM) 209. The non-volatile memory 208 may include any form of non-volatile device memory. In an example, the non-volatile memory 208 includes Flash memory and Electrically Erasable Read Only Memory (EEROM). The RAM 209 may be DDR RAM. The main processor 301 is in wired bi-directional communication with both the non-volatile storage 208 and the Random Access Memory (RAM) 209.

The Hardware Security Module (HSM) further comprises a Power/Reset component 203 configured to control the power provided to the main processor 301. In this example, the Power/Reset component 203 is communicatively coupled to the Input/Output connector 201 such that a user can control power to the main processor 301 via the Input/Output connector 201, for example by transmitting a message to the Hardware Security Module (HSM) via the Input/Output connector 201.

The HSM further comprises a random number generator component 205.

The main processor 301 comprises a first chip 301a, comprising a set of electronic circuits on a surface of a single piece of semiconductor material. The surface of the first chip 301a on which the circuits are provided is referred to as the active surface. The main processor 202 may comprise a package comprising the first chip 301a. The main processor 301 is mounted so that the active side of the main processor chip 301a faces towards the first surface of the PCB 200, i.e. faces downwards.

In this example, the main processor 301 comprises a Field Programmable Gate Array (FPGA) 301. In this example, the main processor 301 comprising the FPGA 301 is a single, discrete, self-contained package that implements various functionality performed by the main processor 202 and the crypto-coprocessor 204 described in relation to Figure 1A. A Field Programmable Gate Array (FPGA) comprises an integrated circuit or part of an integrated circuit comprising an array of programmable logic blocks and a hierarchy of reconfigurable interconnects that allow blocks to be wired together in order to implement a user specified functionality. Unlike a Central Processing Unit, an FPGA can be configured after its manufacture. A manufacturing step defines the fixed logic that is present in the FPGA, including the programmable logic blocks, the presence of any specific Digital Signal Processing or Memory blocks etc.. However, further functionality implemented by the FPGA is then defined at a later stage when the interconnections between the various blocks are formed.

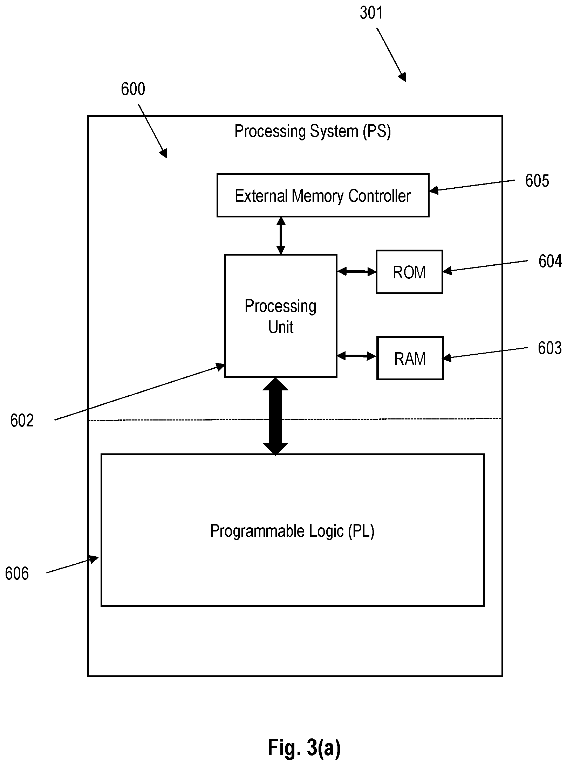

Figure 3(a) shows a schematic illustration of an example SOC (System-on-a-Chip) Field Programmable Gate Array (FPGA), which may be included in the HSM device of Figure 2A as the main processor 301. The figure shows a schematic illustration of components on the active surface of the first chip included in the main processor 301. A SOC FPGA integrates processor and FPGA architecture. An SOC FPGA is a device that comprises a System-on-a-Chip and programmable logic on the same device, thereby combining the high-level management functionality of a processor and the data processing capability of the configurable logic into a single device. An example of a SOC FPGA is the XILINX Zynq UltraScale+ device.

The SOC FPGA is logically divided into a processing system (PS) 600 and programmable logic (PL) 606.

The processing system 600 forms the System-on-a-Chip (SoC), and comprises a processor 602, on-chip Read Only Memory (ROM) 604, on-chip Random Access Memory (RAM) 603 and external memory controller 605. Processor 602 is optionally an application processor unit. In one example the processing unit 602 is an ARM^{®} Cortex-A9 Based processor. The processor 602 is coupled to on-chip Read Only Memory (ROM) 604 (non-volatile storage), and on-chip Random Access Memory (RAM) 603. The processor 602 is also coupled to external memory controller 605 configured to communicate with off-chip memory, which includes the HSM non-volatile storage 208 and RAM 209. The working memory accessed by the processor 602 comprises on-chip Random Access Memory (RAM) 603, HSM RAM 209 and further working memory such as the processor registers. Further components may be included in the SOC FPGA. For example, it may further comprise a battery back RAM component (BBRAM). It may further comprise a built in hardware AES engine.

The processing system 600 is configured to execute program instructions retrieved from memory, for example boot instructions retrieved from the on-chip ROM 604 and application program instructions retrieved from the HSM non-volatile memory 208.

Computer program code is stored in the HSM non-volatile memory 208. When executed, a program is represented as a software product, or process, in the working memory. The processor 602 comprises logic circuitry that responds to and processes instructions in program code present in the working memory. The below description refers to the "main application program", which is program code comprising a set of computer instructions. The main application program comprises machine code stored in the non-volatile memory 208 on the HSM. Also stored in the non-volatile memory 208 on the HSM are any components necessary to execute the main application program, including runtime system files. When executed, a copy of the main application program machine code is loaded in the working memory. A "main application program process" is the instance of the main application program that is being executed, comprising the machine code in the working memory.

The main application program may comprise computer instructions embodying a set of one or more cryptographic algorithms. For example, the main application program comprises computer instructions embodying one or more of the following cryptographic algorithms: cryptographic key generation; key derivation; encryption; decryption; and digital signature algorithms (for example digital signing or validation of a digital signature).

The main application program can be embedded in the non-volatile memory 208 of the Hardware Security Module when the Hardware Security Module (HSM) is manufactured by a trusted party, or can be provided by the trusted party as a whole or in part after manufacture. For instance, the main application program can be introduced by the trusted party as a computer program product, which may be in the form of a download. Alternatively, modifications to an existing main application program can be made by the trusted party by an update or plug-in. Execution of the main application program by the processor 602 causes various functionality of a Hardware Security Module (HSM), such as generating cryptographic keys, storing cryptographic keys, or performing cryptographic operations etc., to be implemented.

The processor 602 runs an operating system, for example a Linux operating system. The operating system comprises system software that manages the hardware and software resources of the HSM device, and acts as an intermediary between the main application program and the HSM hardware.

The processor 602 is configured to communicate with programmable logic 606 via an interconnect, for example a bus. In one example, the interconnect is an ARM AMBA^{®} AXI based interface. In this way, the software being executed by the processing unit 602 can interact with the programmable logic 606, for example to obtain a value calculated by the programmable logic 606, start a hardware operation etc..

A bit file for the programmable logic 606, including instructions on how to configure the programmable logic to perform the desired functionality, can be stored in the non-volatile memory 208 of the HSM. The SOC FPGA 301 is configured to perform, using the configurable logic 606, various cryptographic functions in hardware, for example various standard encryption and decryption algorithms, and digital signature algorithms. For example, the SOC FPGA 301 is configured to provide at least one of: a public key hardware accelerator (PKSA), a random number generator, an advanced encryption standard accelerator (AESA) and a message digest hardware accelerator (MDHA). In the SOC FPGA 301, one or more of these operations are implemented directly in hardware.

The programmable logic 606 is configured to receive requests to perform one or more of these operations from the processing system 600 and to return to the processing system 600 the output of the operation. The processing system 600 is configured to offload various operations to the programmable logic 606. The programmable logic 606 is configured to perform certain operations in hardware, meaning that these operations may be performed more efficiently on the programmable logic 606 than on the processing system 600.

The SOC FPGA 301 may be configured to perform various monitoring functionality, such as one or more of: monitoring whether any temperature measurements exceed configured limits, any supply voltage measurement exceed configured limits, and the frequency of any monitored user clock for example. If any of these conditions are detected, the SOC FPGA 301 resets the processing unit 602, clears all memory elements in the PS, zeroes the BBRAM, and writes all zeros to the FPGA configuration and registers. This functionality can be performed at the PS or the PL.

The SOC FPGA 301 comprises a plurality of pins (not shown). These are metal connections to which a via, pad, wire or trace on the PCB 200 can be connected.

The SOC FPGA 301 comprises a plurality of processing system (PS) pins. For example, the external memory controller 605 may be configured to communicate via one or more PS pins with off-chip memory, which includes the HSM non-volatile storage 208 and RAM 209. The processing unit 602 may be configured to receive input and provide output through one or more PS pins.

The SOC FPGA 301 further comprises a plurality of multi-function I/O pins. These pins may provide an interface through which information can be received directly into the programmable logic component 606 and through which information can be transmitted out of the programmable logic component 606.

The SOC FPGA 301 further comprises a plurality of power pins. When mounted onto the PCB 200, one or more power pins are connected to electrically conductive traces on the printed circuit board 200 which distribute power. The set of power pins comprises a plurality of ground pins. For example, there may be one ground pin for a number of I/O pins. The ground pins are also connected to each other through electrically conductive traces in the SOC FPGA. For example, all of the ground pins of the SOC FPGA package may be connected to one another using internal traces.

The SOC FPGA 301 further comprises a plurality of dedicated pins. The set of dedicated pins comprises a DXP pin and a DXN pin. These are temperature sensing diode pins, which connect to a temperature sensing diode on the active surface of the SOC FPGA chip. The location of the pins for devices in the XILINX Zynq UltraScale+ family is shown in device diagrams contained in the document "Zynq UltraScale+ Device Packaging and Pinouts" for example, also referred to as document UG1075 (v1.11).

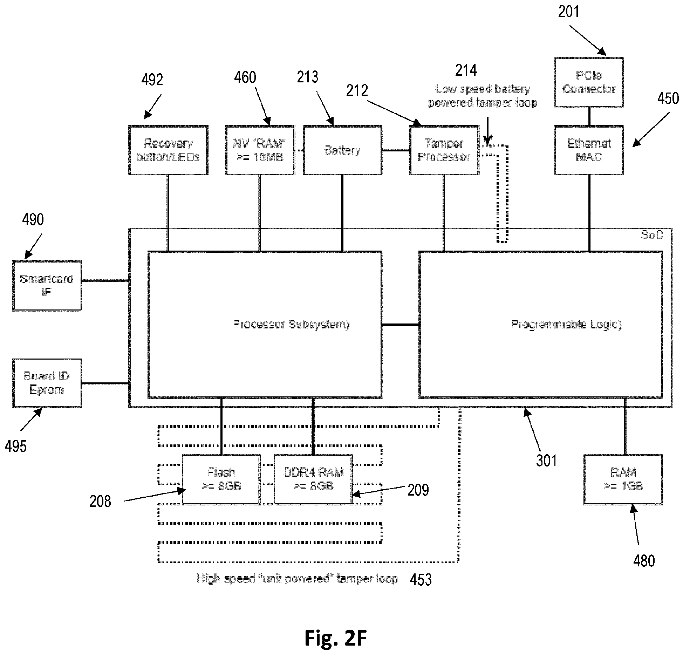

Figure 2F shows a schematic illustration of the components and connections in the HSM device, with a SOC FPGA component as the main processor 301. The figure does not represent the physical locations of the components mounted on the PCB 200, but rather illustrates the connections between the components. As described above, the tamper processor 212 is mounted on the opposite side of the PCB 200 and at least partly overlapping the main processor 301, however this is not shown in the figure, which only illustrates the connections between the components. As shown in the figure, the tamper processor 212 is connected into the programmable logic (PL) section of the main processor 301 in this example, but the tamper processor 212 may have a direct connection to the processing system (PS) as well or instead. An Ethernet interface 450 is connected into the PL section of the main processor 301, but again a direct connection to the PS subsystem may additionally or alternatively be provided. A hardware RNG (not shown) is provided by a combination of a FIPS compliant RNG within the tamper processor 212 and a RNG built into the PL on the main processor 301. A first tamper detection link 214 is provided between the tamper processor 212 and the main processor 301. A further tamper detection link 453 is provided between the main processor 301 and one or more HSM memory components, including the non-volatile storage 208 and the DDR RAM 209. The non-volatile storage 208 and the DDR RAM 209 are coupled to the PS. A further non-volatile (NV) RAM 460 component is coupled to the PS and provides a fast, high endurance non-volatile storage capability. A further RAM component 480 is also coupled to the PL. The device may further comprise a smart card interface 490, a recovery button/ LEDs 492, and a Board ID stored in Eprom 495.

Referring back to Figure 2A, the hardware security module (HSM) further comprises a tamper processor 212. The tamper processor 212 comprises a second chip 212a, comprising a set of electronic circuits on a surface of a single piece of semiconductor material. The surface of the second chip 212a on which the circuits are provided is referred to as the active surface. The tamper processor 212 may comprise a package comprising the second chip 212a. The tamper processor 212 is mounted so that the active side of the chip 212a faces towards the second surface of the PCB 200. In this example, the tamper processor 212 is an ultra-low power microcontroller device. One example of a low-power microcontroller that may be used as a tamper processor 212 is the Maxim MAX32550. The main processor 301 is in wired bi-directional communication with the tamper processor 212.

The tamper processor 212 provides tamper detection. As will be described in relation to Figure 2B below, the tamper processor 212 is configured to detect an attempt to remove the main processor 301 from the printed circuit board 200, using the tamper detection link 214. In this example, the tamper processor 212 performs only functions relating to detection and handling of intrusion attempts.

The tamper processor 212 may comprise a processor, non-volatile flash memory, non-volatile SRAM, a one time programmable (OTP) memory, a built in AES encryption engine using a tamper protected AES key, hardware for random number generation, one or more external tamper sensor interfaces, one or more voltage and temperature tamper monitors, and a battery switch over. The components may be contained in a ball grid array package.

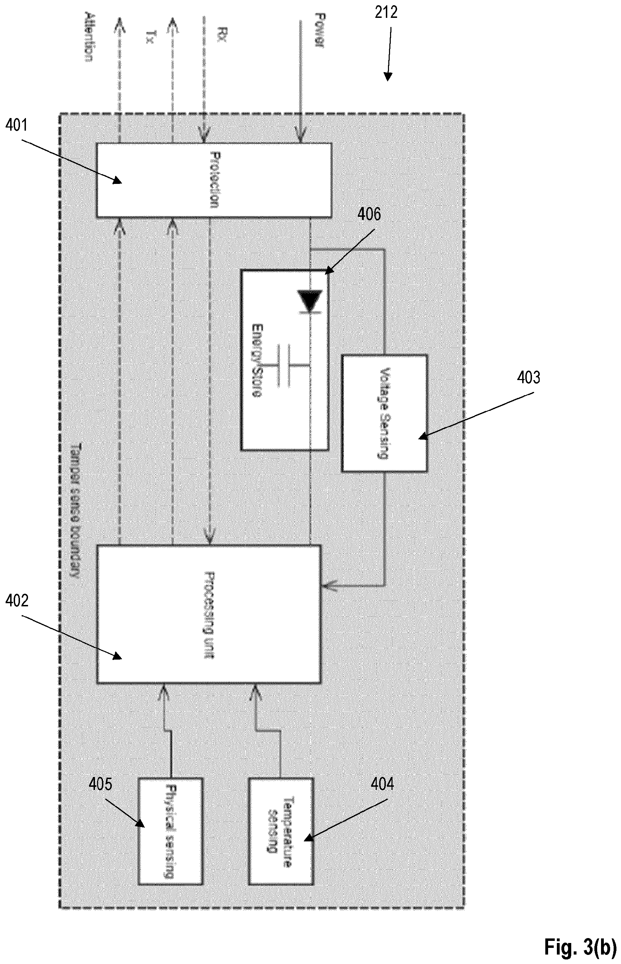

Figure 3(b) shows a schematic illustration of an example tamper processor 212. The tamper processor 212 comprises a protection block 401, which is configured to provide protection against external voltage tampering. The protection block 401 is further configured to provide protection against parasitic powering - while on-battery the protection block 401 protects against the Rx, Tx, Attention or Power lines providing a parasitic power path to the rest of the HSM. The power line provides power to the tamper processor 212. The Rx and Tx are the receive and transmission lines, through which the tamper processor 212 communicates with the main processor 301. The attention line is used to notify the main processor 301 of a tamper detection. If a tamper event occurs, after the tamper processor 212 has unilaterally processed the tamper, if the system is not on battery it asserts the attention line, and in response the main processor 301 can query the tamper processor 212 to determine what (if any) action needs to be taken.

The tamper processor 212 further comprises a processing unit 402. The Rx, Tx and attention lines are coupled to the processing unit via the protection block 401. The power line is coupled to a voltage sensing component 403 through the protection block 401. The voltage sensing component 403 is configured to signal to the processing unit 402 if any power rail is outside of normal operation. A temperature sensing block 404 is configured to signal to the processing unit 402 if any temperature is outside of normal operation. A physical sensing block 405 is configured to signal to the processing unit 402 if any physical sensor (for example a tamper mesh) has been breached.

The power line is also connected to an energy store 406, which is coupled to the processing unit 402. The energy store 406 contains sufficient power to allow all sensitive material to be actively erased from the processing unit 402. The processing unit 402 stores the keys to be protected, and provides a secure method to convey those keys to the main processor 301. If any tamper sensor is activated, the stored keys will be erased. The tamper sense boundary provides sensing of a physical attack on the tamper processor 212. Monitoring of this tamper sense boundary is continuous and performed with no software intervention. The tamper sensor boundary may comprise a die shield on the top layer of the silicon in the second chip 212a. If this shield detects an intrusion attempt, a tamper event will be raised.

In this example, the tamper processor 212 is configured to act as an attendant for the main processor 301. It is requested to perform actions by the main processor 301, for example via a universal asynchronous receiver-transmitter (UART) port. It does not initiate communications itself.

A secure channel is used for communication between the main processor 301 and the tamper processor 212. The secure channel may be based on an ephemeral transport key. All requests and responses from and to the main processor 301 are encrypted and authenticated using the ephemeral transport key, with the exception of the messages required for obtaining basic status information, messages to derive the ephemeral transport key itself and messages perform manufacturing time setup. An ephemeral transport key is used when transferring keys and other sensitive data between the tamper processor 212 and the main processor 301. Asymmetric keys, generated at system initialisation time, are used to securely derive the ephemeral transport key as required.

Although an example cryptographic protocol for establishing a secure channel between the main processor 301 and the tamper processor 212 has been described, other cryptographic protocols may be used.

Requests from the main processor 301 to the tamper processor 212 include: writing long term asymmetric device keys at manufacture time in plaintext; deriving the ephemeral transport key at system start-up in plaintext; writing long term asymmetric instance keys; reading and writing application keys; and reading tamper status.

Returning to Figure 3A, the hardware security module (HSM) of Figure 3A further comprises a power component 213. The power source 210 may be a battery, for example an AA sized battery. Alternatively, the power component may be a super-capacitor. The power source 213 is configured to provide power to the tamper processor 212 when the hardware security module is switched off and not in use. The tamper processor 212 is therefore able to monitor the tamper detection link 214 even when the HSM is not powered, i.e. when the external power supply is switched off. The power/reset component 203 may be configured to provide power to the tamper processor 212 when the hardware security module is switched on and in use.

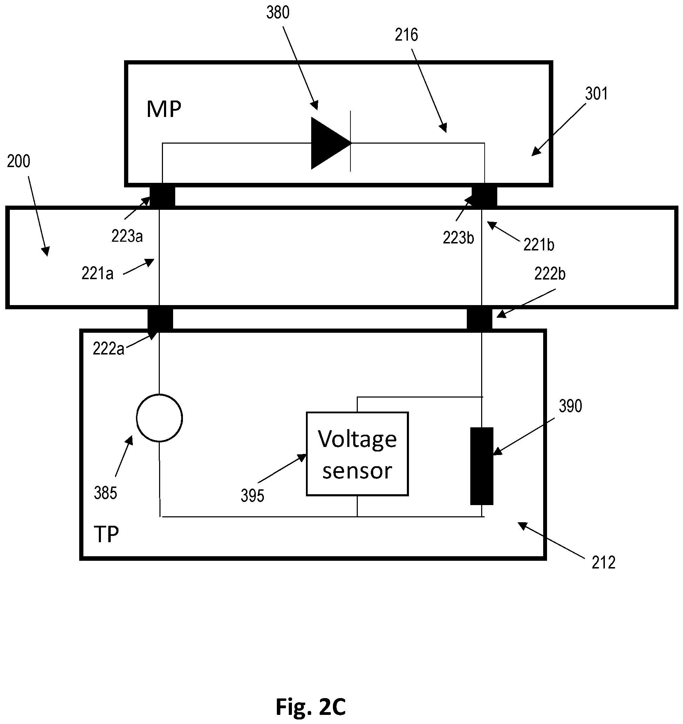

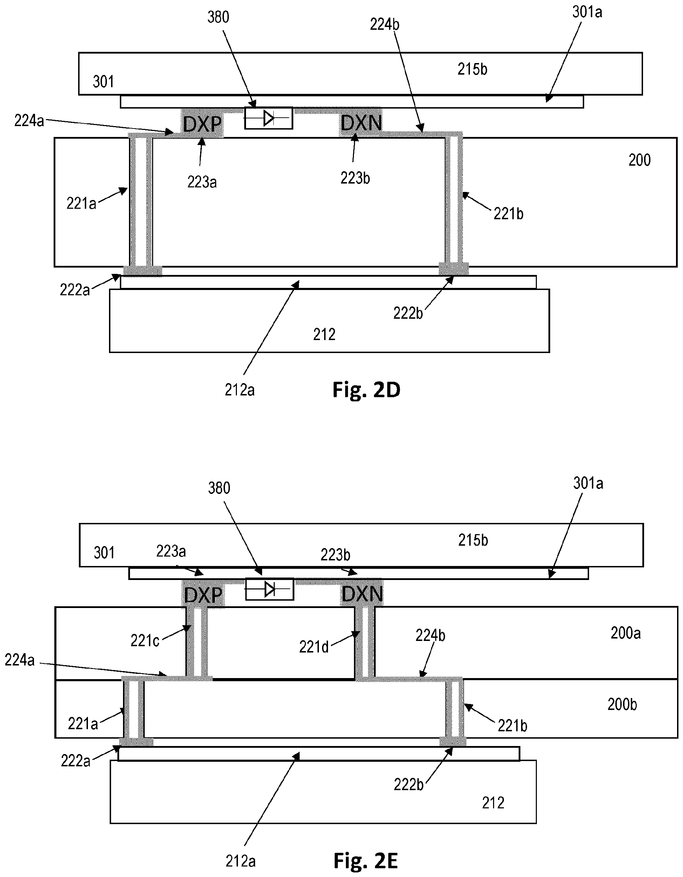

Figure 2B shows a cross-sectional view of the Hardware Security Module (HSM) device, showing the tamper processor 212, main processor 301, and a tamper detection means comprising a tamper-detection link 214. Figure 2C shows a cross-sectional view of the Hardware Security Module (HSM) device, showing further detail. The tamper detection link 214 is provided within the area of overlap between the tamper processor 212 and the main processor 301, as shown in Figure 2B. The tamper detection link 214 connects to and from the tamper processor 212. Figure 2D shows a cross-sectional view of an example Hardware Security Module (HSM) device, showing the tamper processor 212, main processor 301, and the connections forming a tamper detection link 214.

The tamper detection link 214 comprises a first connection 215a, a conductive path 216 on the SOC FPGA 301, and a second connection 215b.

The first connection 215a is a connection between the main processor 301 and the tamper processor 212, and comprises an electrically conductive path through the PCB 200. In particular, the first connection 215a comprises a first via hole 221a. A PCB via hole comprises a hole through the PCB board, between the first surface and the second. The hole is plated with an electrically conductive material. On the first surface of the PCB 200, the first via hole 221a is electrically connected to a pad or trace on the first surface of the PCB 200. On the second surface of the PCB 200, the first via hole is electrically connected to a pad or trace on the second surface of the PCB 200.

The tamper processor 212 is mounted on the second surface of the PCB 200 such that a first input/output (I/O) connection 222a (first I/O pin) on the tamper processor 212 is electrically coupled to the first via hole 221a. For example the first via hole 221a is connected to a pad on the second surface of the PCB 200, and the pad is coupled to the first input output connection 222a on the tamper processor 212. The connection may be made directly using a solder joint as shown in the example of Figure 2D. Alternatively, the first connection 215a further comprises a trace on the second surface of the PCB 200 forming a connection between the first via hole 221a and the first I/O pin 222a. The main processor 301 is mounted on the first surface of the PCB 200 such that a first pin 223a on the main processor 301 is electrically coupled to the first via hole 221a. For example, the first via hole 221a is connected to a pad on the first surface of the PCB 200, and the pad is coupled to the first pin 223a on the main processor 301. In this example, the first connection 215a further comprises a trace 224a on the first surface of the PCB 200 as shown in Figure 2D, between the first via hole 221a and the first pin 223a. Alternatively, the connection may be made directly using a solder joint.

In an example, the first pin on the main processor 301 is a pin from the set of dedicated pins described in relation to Figure 3. For example, as shown in Figure 2D, the first pin 223a is the DXP pin, which is connected to the temperature sensing diode 380 on the main processor 301.

The first connection 215a comprising the first via hole 221a provides an electrically conductive connection between the tamper processor 212, provided on the second side of the printed circuit board 200, and the main processor 301 provided on the first surface of the printed circuit board 200. The first connection 215a is provided through the PCB 200 and in the area inbetween the main processor 301 and the tamper processor 212. The first connection 215a is provided in the area of overlap between the main processor 301 and the tamper processor 212, and is not easily accessible. In the example of Figure 2D, the first connection comprises a first via hole 221a and a first trace 224a on the first surface of the PCB 200 and inbetween the PCB 200 and the main processor 301.

The second connection 215b is a connection between the main processor 301 and the tamper processor 212, and comprises an electrically conductive path on the PCB 200. The second connection 215b comprises a second via hole 221b. On the first surface of the PCB 200, the second via hole 221b is electrically connected to a pad or trace on the first surface of the PCB 200. On the second surface of the PCB 200, the second via hole is electrically connected to a pad or trace on the second surface of the PCB 200.

The tamper processor 212 is mounted on the second surface of the PCB 200 such that a second input/output (I/O) connection 222b (second I/O pin) on the tamper processor 212 is electrically coupled to the second via hole 221b. For example the second via hole 221b is connected to a pad on the second surface of the PCB 200, and the pad is coupled to a second input output connection 222b on the tamper processor 212. The connection may be made directly using a solder joint as shown in the example of Figure 2D. Alternatively, the second connection 215b further comprises a trace on the second surface of the PCB 200, forming a connection between the second via hole 221b and the second I/O pin 222b. The main processor 301 is mounted on the first surface of the PCB 200 such that a second pin 223b on the main processor 301 is electrically coupled to the second via hole 221b. For example, the second via hole 221b is connected to a pad on the first surface of the PCB 200, and the pad is coupled to the second pin 223b on the main processor 301. In this example, the second connection 215b further comprises a second trace 224b on the first surface of the PCB 200 as shown in Figure 2D, between the second via hole 221b and the second pin 223b. Alternatively, the connection may be made directly using a solder joint.

In an example, the second pin 223b on the main processor 301 is a pin from the set of dedicated pins described in relation to Figure 3. In the example of Figure 2D, the second pin 223b is the DXN pin, which is connected to the temperature sensing diode 380 on the main processor 301.

The second connection 215b comprising the second via hole 221b provides a second electrically conductive connection between the tamper processor 212, provided on the second side of the printed circuit board 200, and the main processor 301 provided on the first surface of the printed circuit board 200. The second connection 215b is provided through the PCB 200 and in the area inbetween the main processor 301 and the tamper processor 212. The second connection 215b is provided in the area of overlap between the main processor 301 and the tamper processor 212, and is not easily accessible. In the example of Figure 2D, the second connection 215b comprises a second via hole 221b and a second trace 224b on the first surface of the PCB 200 and inbetween the PCB 200 and the main processor 301.

Where the mounting location of the first pin 223a of the main processor 301 and the first I/O pin 222a of the tamper processor 212 align, the first connection may not comprise any PCB traces, and may be a single via hole. Similarly, where the mounting location of the second pin 223b of the main processor 301 and the second I/O pin 222b of the tamper processor 212 align, the second connection may be a single via hole. Otherwise, PCB traces are included in the connections.

In Figure 2D, the via holes in first and second connections 215a and 215b are shown to start from one outer layer of the printed circuit board 200 and end in the other outer layer of the printed circuit board 200. Alternatively, one or both of the via holes may comprise one or more blind or buried via connections. Blind via connections are a type of via that starts from one outer layer of the printed circuit board but end in one of the middle layers of a multi-layered printed circuit board. Buried via connections are another type of via that both start and end between inner layers of a multi-layered printed circuit board. In such cases, the blind or buried vias are connected with other vias using traces provided in the inner layers of the printed circuit board to form a continuous electrical connection between the two outer layers of the printed circuit board.

For example, Figure 2E shows an alternative arrangement, in which the first via hole 221a is a blind via hole from the second surface of the PCB 200 through a second layer 200b of the PCB 200. The first via hole 221a is connected to a pad on the second surface of the PCB 200, and the pad is coupled to the first input output connection 222a on the tamper processor 212. A third via hole 221c is a blind via hole from the first surface of the PCB 200 and through a first layer 200a of the PCB 200. The third via hole 221c is connected to a pad on the first surface of the PCB 200, and the pad is coupled to the first pin 223a on the main processor 301. A first trace 224a is provided between the first layer 200a and the second layer 200b and connects the first via hole 221a and the third via hole 221c. The first connection 215a comprises the first via hole 221a, the first trace 224a and the third via hole 221c.

The second via hole 221b is also a blind via hole from the second surface of the PCB 200 and through a second layer 200b of the PCB 200. The second via hole 221b is connected to a pad on the second surface of the PCB 200, and the pad is coupled to a second input output connection 222b on the tamper processor 212. A fourth via hole 221d is a blind via hole from the first surface of the PCB 200 and through a first layer 200a of the PCB 200. The fourth via hole 221d is connected to a pad on the first surface of the PCB 200, and the pad is coupled to the second pin 223b on the main processor 301. A second trace 224b is provided between the first layer 200a and the second layer 200b and connects the second via hole 221b and the fourth via hole 221d. The second connection comprises the second via hole 221b, the second trace 224b and the fourth via hole 221d.

The conductive path 216 comprises the first pin 223a, the second pin 223b, and an electrically conductive connection between the first pin 223a on the main processor 301 and the second pin 223b on the main processor 301. In this example, the conductive path 216 comprises the first pin 223a, a first trace connecting between the first pin 223a and the diode 380, the diode 380, a second trace connecting between the diode 380 and the second pin 223b, and the second pin 223b. As shown in Figure 2D, the conductive path 216 is provided on an active surface of the first chip in the main processor 301, which when mounted is facing the PCB 200.The conductive path may further comprise a part formed within internal layers of the first chip in the main processor 301. The conductive part 216 does not include any part which is on the surface of the first chip facing away from the PCB 200. Furthermore, the conductive path 216 is provided on or in the main processor 301 in the area of overlap between the mounting area of the main processor 301 and the mounting area of the tamper detection processing component 212. The conductive path 216 does not comprise a part on the main processor 301 outside this area.

Together, the first connection 215a, the conductive path 216 and the second connection 215b form a continuous electrically conductive loop i.e. a closed circuit from the first input/output connection on the tamper processor 212 to the second input/output connection on the tamper processor 212. The tamper detection link 214 is provided inbetween the main processor 301 and the tamper processor 212. It is provided in the area of overlap between the two components. In particular, the tamper detection link 214 comprises a first connection 215a from the tamper processor 212 to the main processor 301 and a second connection 215b from the tamper processor 212 to the main processor 301. The first connection 215a and the second connection 215b are provided in the area inbetween the main processor 301 and the tamper processor 212.

The sections of the tamper detection link 214 are provided on one or more of: an internal part of the tamper processor 212, a surface of the tamper processor 212 which faces the PCB 200, the second surface of the PCB 200 in the area on which the tamper processor 212 is mounted, within the PCB 200, on the first surface of the PCB 200 in the area on which the main processor 301 is mounted, on a surface of the main processor 301 which faces the PCB 200, and within the main processor 301. The tamper detection link 214 is therefore not accessible.

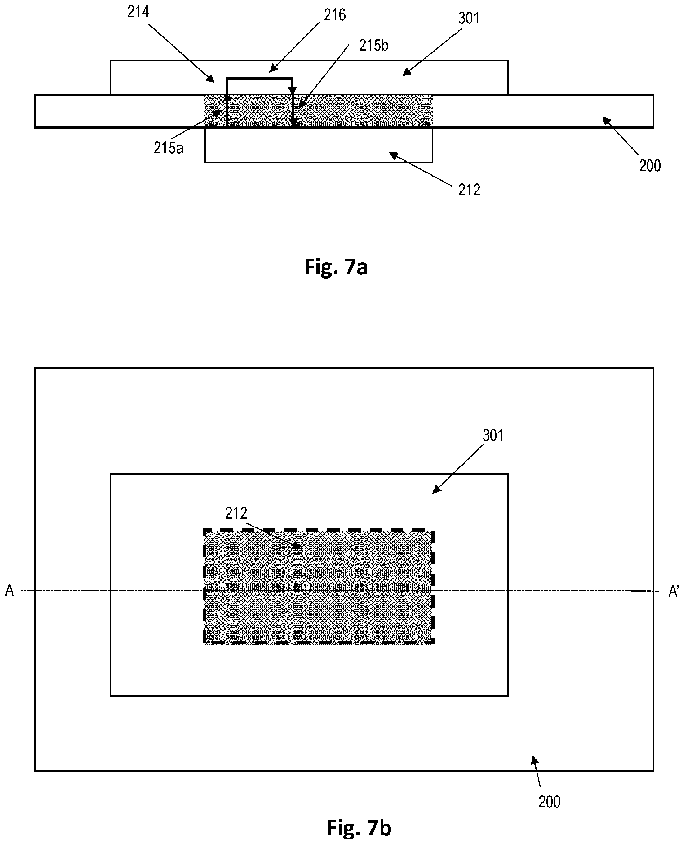

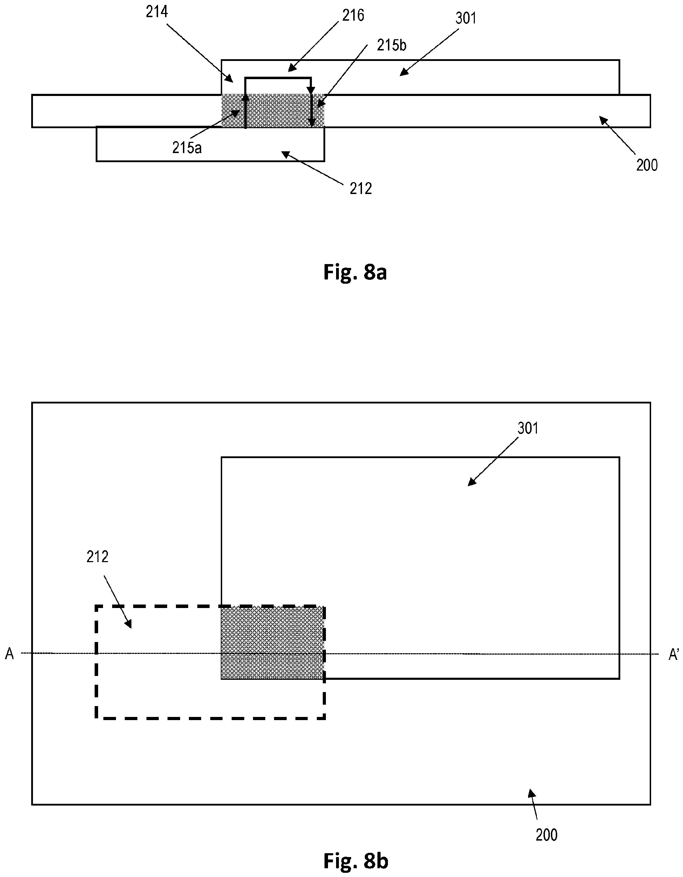

Figures 7a and 7b show a schematic illustration of a hardware security module device comprising a PCB 200, a main processor 301 and a tamper processor 212. Figure 7b is a schematic illustration showing a plan view and Figure 7a shows a cross-section across line A-A' shown in Figure 7b. The first connection 215a and the second connection 215b are contained within the shaded area. No part of the first tamper detection link 214 is provided outside the area of overlap of the tamper processor 212 and the main processor 301. Figure 8b is a schematic illustration showing a plan view of another hardware security module and Figure 8a shows a cross-section across line A-A' shown in Figure 8b. The first connection 215a and the second connection 215b are contained within the shaded area. No part of the first tamper detection link 214 is provided outside the area of overlap. In Figures 8a and 8b, only part of the tamper processor 212 overlaps with only part of the main processor 301. The first 215a and second 215b connection are contained within this area.

The tamper processor 212 is configured to detect an open circuit on the tamper detection link 214. The tamper processor 212 performs this check continuously, even when the hardware security module is switched off.

Optionally, in an example in which the tamper detection link 214 comprises an electronic component, the tamper processor 212 may further detect for the presence of this component. For example, the tamper processor 212 may detect for the presence of the diode 380 in the example of Figure 2D, where an open circuit or the absence of the diode indicates that tampering has occurred. Fig. 2C shows a schematic illustration of circuit elements that could be included on the tamper processor 212 to detect the presence or absence of a diode in the tamper detection link 214. It is to be understood that the measurement may in practice be made using various different components, for example, an analogue to digital converter on the tamper processor 212. The tamper detection link 214 comprises a first connection 215a, which in this example comprises a first via hole 221a. The tamper detection link 214 further comprises a conductive path 216, which in this example comprises a first pin 223a and a second pin 223b on the main processor 301, and a diode 380 coupled between the pins. The tamper detection link 214 further comprises a second connection 215b, which in this example comprises a second via hole 221b. The first via hole 221a is coupled to the first pin 223a on the main processor 301 and a first input/output pin 222a on the tamper processor 212 and the second via hole 221b is coupled to the second pin 223b on the main processor 301 and a second input/output pin 222b on the tamper processor 212. At the tamper processor 212, a DC voltage source 385 is coupled to the first input/output pin 222a. The tamper processor 212 first applies a bias in one direction on the tamper detection link 214 using the DC voltage source 385. A voltage measurement is then made using a voltage sensor 395, which measures the voltage drop across a resistor 390 coupled between the DC voltage source 385 and the second input/output pin 22b. The tamper processor 212 then reverses the bias applied to the tamper detection link 214, and makes the voltage measurement again.

If the tamper detection link 214 is intact and the diode 380 present, then a high signal is detected for one measurement and a low signal detected for the other measurement.

If the main processor 301 has been removed, an open circuit would be detected for both measurements. If the main processor 301 has been linked out using a wire by an attacker, then the same measurement would be obtained for both measurements, indicating that the diode 380 is absent. In both cases, a tamper would be detected.

If the tamper processor 212 loses power at any time, this would also be recorded as a tamper event when power is restored. In some examples, a low battery event will also cause a tamper to be detected.

A user may store sensitive cryptographic material on the HSM, such as a master key or material that can be used to obtain the master key. For example, one or more cryptographic application keys are associated with a user of the HSM device. The cryptographic application keys may be stored on the HSM. For example, the cryptographic application keys may be encrypted with a master key and stored on the non-volatile storage 208. Alternatively, the cryptographic application keys may be encrypted with the master key and stored outside the HSM. The master key, or material that can be used to obtain the master key, is then securely stored inside the HSM, split between the main processor 301 and the tamper processor 212.

Here, the functionality of the tamper processor 212 will be illustrated with an example in which the HSM stores a single key, which will be referred to as the master key.

However, it will be understood that multiple keys, or other types of sensitive data, may be stored and handled in a similar manner.

The master key is split into two parts, a first part and a second part. The master key can only be used when the two parts are combined. For example, the master key is split into two bit strings, which are combined to form the master key. The tamper processor 212 comprises an internal non-volatile memory component. The first part of the master key is stored on the tamper processor 212 in the internal memory component. The second part of the master key is stored on the main processor 301, in storage (for example RAM 603). The RAM 603 is battery backed, meaning that the second part of the master key is stored even when the HSM is powered off. In operation, when the HSM is powered on, if no tamper has been detected, the tamper processor 212 sends the first part of the master key from the tamper processor 212 to the main processor 301. The main processor 301 combines it with the second part of the master key to form the master key, and uses the master key to decrypt an application key, for example.

If the tamper processor 212 detects a tamper, for example an open circuit on the tamper detection link 214, the tamper processor 212 erases the first part of the master key. This prevents the master key from being formed, even if an attacker is able to retrieve the second part of the master key. Thus the tamper processor 212 stores cryptographic material which is erased in response to detection of a tamper. The tamper processor 212 can detect the tamper and erase the stored cryptographic key material even when the hardware security module is switched off.

Optionally, if the HSM device is powered on when a tamper is detected by the tamper processor 212, the tamper processor 212 is also configured to send a notification to the main processor 301, for example on the attention line described in relation to Figure 3b. The main processor 301 then enters an alarm state. Upon start-up, the main processor 301 may query the tamper processor 212 to obtain a tamper status, or may simply request the first part of the master key. If the tamper processor 212 indicates a tamper has occurred, or is unable to provide the master key, the main processor 301 may again enter an alarm state. Entering an alarm state causes the main processor 301 to erase the second key part, along with erasure of all internal memories, reset of the processing unit 602 and writing all zeros to the FPGA configuration and registers. For example, when the HSM is powered on, in response to receiving an indication from the tamper processor 212 that the HSM has been compromised, the main processor 301 is configured to suspend start up and delete the second part of the master key.

All of the first part and/or second part of the master key may be erased on detection of a tamper, or only a portion of the first part and/or second part may be erased, where a sufficient portion is erased to make the master key unrecoverable.

The tamper processor 212 is configured to communicate with the main processor 301. As has been described previously, a secure channel may be provided between the main processor 301 and the tamper processor 212. The secure channel may be provided on a connection located in the area of overlap between the main processor 301 and the tamper processor 212. The tamper processor 212 and the main processor 301 communication over the secure channel.

In some examples, one or both of the main processor 301 and the tamper processor 212 have built-in Physically Uncloneable Function (PUF) blocks, that are used in the derivation of the master key material. Alteration to the silicon chip, especially in the vicinity of the PUF elements, will change the output of the PUF causing effective erasure of the key part derived from the PUF.

A simple example in which a master key is used to encrypt data, with the master key being split into two parts for storage between the main processor 301 and the tamper processor 212 is described above.

An alternative example, in which material used to derive the master key is stored between the main processor 301 and the tamper processor 212, will now be described. In this example, the master key is derived from two keys, referred to as MK1 and MK2 using a key derivation function. The master key is derived on the main processor 301 when needed to decrypt data, from MK1 and MK2.

MK2 is stored on the tamper processor 212 in encrypted form, and decrypted and provided to the main processor 212 when requested. It is stored on the tamper processor 212 encrypted with a key, which may be an AES 256 bit key, referred to as TP-SEK (Tamper processor storage encryption key). The storage encryption key TP-SEK is used by the tamper processor 212 to protect sensitive data. Sensitive data, including MK2, is stored on the tamper processor 212 encrypted with TP-SEK. The TP-SEK is generated from a hardware random number generation component on the tamper processor 212. If a tamper is detected at the tamper processor 212, it immediately performs a hardware erasure of the TP-SEK.

MK1 is stored on the main processor 301 in an encrypted form. The main processor 301 stores a key, which may be a 256 bit AES key, referred to as MP-SEK (Main processor storage encryption key). The storage encryption key MP-SEK is used by the main processor 301 to protect sensitive data. Sensitive data, including MK1, is stored on the main processor 301 encrypted with MP-SEK. The MP-SEK is generated from a hardware random number generation component on the main processor 301. If a tamper is detected at the main processor 301, it immediately performs a hardware erasure of the MP-SEK.

The MK1 and MK2 keys are used to derive the master key, which is used to encrypt the user data, such as the application keys for storage elsewhere. The master key is derived using a key derivation function taking MK1 and MK2 as input. Once the user data has been encrypted, the master key is deleted. To decrypt the user data, the master key is re-derived at the main processor 301. This involves tamper processor decrypting MK2, and sending to the main processor 301, then decrypting MK1 at the main processor 301. If a tamper is detected at the tamper processor 212, erasure of TP-SEK from the tamper processor 212 prevents the TP-SEK key from being used. This in turn prevents MK2 from being decrypted, and so prevents the master key from being derived. Similarly, erasure of the MP-SEK key at the main processor 301 in response to a tamper event prevents MP-SEK from being used, and thus prevents MK1 from being decrypted, which in turn stops the master key from being derived.

In other examples, the tamper processor 212 does not store cryptographic material, and the cryptographic material is stored elsewhere in the HSM. Again, the tamper processor 212 is configured to communicate with the main processor 301. The tamper processor 212 provides information indicating whether or not the security of the Hardware Security Module (HSM) has been compromised. For example, when the HSM is powered on, in response to receiving an indication from the tamper processor 212 that the HSM has been compromised, the main processor 301 is configured to suspend start up and delete stored cryptographic material from the HSM.

The tamper processor 212 and main processor 301 chips each comprise an active surface, also referred to as an active side, and a back side surface, opposite the active surface. The active surface comprises an integrated circuit patterned thereon. The tamper processor 212 and main processor 301 are mounted so that the active surfaces face towards the PCB 200 - in other words, flip chip mounting is used. This provides tamper resistance.

Various types of flip chip mounting may be used. In the example described here, the chip is flip chip mounted within a package, which is then mounted on the PCB 200. The package may be mounted onto the PCB 200 using solder joints. An example is a flip chip ball grid array package, in which a chip is flip chip mounted to a substrate within the package, which is then mounted onto the PCB 200. The active surface of the chip faces towards the substrate within the package, and when the package is mounted onto the PCB 200, faces towards the PCB 200.

In more detail, the chip comprises a semiconductor die, having an active surface on which a circuit is fabricated. When packaging the chip, the chip is mounted onto a substrate with the active side of the semiconductor die facing towards the substrate. Pads on the active surface of the semiconductor die are connected by solder joints to pads on the substrate to form the package. The package is then mounted on the PCB 200, the active side of the semiconductor die facing the PCB 200. The package may be mounted onto the PCB using solder joints. In this case, the tamper processor 212 is implemented in a self-contained package as a flip-chip component. The main processor 301 is also implemented in a self-contained package as a flip-chip component. The first pin 223a and the second pin 223b on the main processor 301 which are used in the tamper detection link 214 are selected from pins which are located on the under surface of the package.

In alternative examples, the chip may be directly flip chip mounted onto the PCB. In this case, the chip again comprises a semiconductor die, having an active surface on which a circuit is fabricated. The chip is mounted onto the PCB 200 with the active side of the semiconductor die facing towards the PCB 200. Pads on the active surface of the semiconductor die are connected by solder joints to pads on the PCB 200.

In both cases, the active side of the semiconductor die faces the PCB 200, and therefore in order for a malicious third party to probe circuitry, the third party is required to either remove the component from the PCB 200 or drill through the PCB 200 underneath the component. Therefore, the work function to access and probe the component, for example to disable or counteract any chip-level tamper features, is increased. Furthermore, the conductive path 216 on the main processor 301 that forms part of the tamper detection link 214 and the connections on the tamper processor that connect to the tamper detection link 214 are covered by the die, in other words, they are located within the chip, or on the active surface of the chip facing the PCB 200. As shown in Figures 2D and 2E, the conductive path 216 may include the DXP pin on the main processor 301, a trace between the DXP pin and the diode, the DXN pin on the main processor 301, a trace between the DXN pin and the diode. The connections on the tamper processor may include the first I/O pin on the tamper processor 212, any trace and/or component connected to the first I/O pin 222a on the tamper processor 212, the second I/O pin 222b on the tamper processor 212 and any trace and/or component connected to the second I/O pin on the tamper processor 212.

Furthermore, the tamper processor 212 is provided on the surface of the printed circuit board 200 opposite the surface on which the main processor 301 is provided, and at least partly overlapping. In the hardware security module of Figure 3A, the main processor 301 is provided on a first surface of the printed circuit board 200 together with various other components, and the tamper processor 212 is provided on the back surface of the printed circuit board 200 (the second surface). In Figure 3A, the tamper processor 212 mounting area is outlined in a dashed line to denote the provision of the tamper processor 212 on the back surface of the printed circuit board 200.

In the hardware security module of Figure 3A, the tamper processor 212 is mounted opposite the FPGA 301. The mounting area of the tamper processor 212 is smaller than the mounting area of the FPGA 301 and is fully contained within the mounting area of the FPGA 301. This overlap of the tamper processor 212 and the FPGA 301 means that a malicious third party may need to remove the tamper processor 212 or the FPGA 301 from the printed circuit board 200 to access the active side of the tamper processor 212 or the active side of the FPGA 301 by drilling. In particular, it may not be possible to access the tamper processor 212 or the main processor 301 by drilling through the PCB 200.

Furthermore, as has been described above, a tamper-detection link 214 is provided in the area of overlap between the tamper processor 212 and the FPGA 301. Providing the tamper-detection link 214 in the area of overlap constrains the space available for a malicious third party to attempt to disable the tamper-detection link 214.

Optionally, in addition to monitoring the first tamper detection link 214, the tamper processor 212 may perform various functionality described in relation to the tamper processor 206 in Figure 1A. In this case, the HSM may further comprise a plurality of on board sensors 207. The tamper processor 212 is configured to communicate with the plurality of on-board sensors 207. The sensors 207 are configured to monitor physical properties that may indicate an attempt to tamper with the HSM. The tamper processor 212 and the sensors 207 provide tamper detection. The sensors may include one or more of: one or more temperature sensors (for example to monitor the temperature of the main processor 202 and/or the PCB 200), one or more voltage sensors and one or more current sensors. The tamper processor 212 is configured to detect an indication that the HSM is being or has been tampered with. For example, the tamper processor 212 may be configured to detect a cold boot attack based on readings obtained from the temperature sensors. Although in the above described example, the conductive path 216 comprises a first pin which is the DXP pin, a second pin which is the DXN pin and an electrically conductive path between the first pin and the second pin which comprises a diode, in alternative examples the conductive path 216 comprises a first connection point on the main processor 301 (which may be a different dedicated pin, a power pin such as a ground pin, a PS pin or an I/O pin for example), a second connection point on the main processor 301 (which may be a different dedicated pin, a power pin such as a ground pin, a PS pin or an I/O pin for example) and an electrically conductive path between them on the main processor 301. In some examples, the conductive path 216 may comprise one or more electrical components.

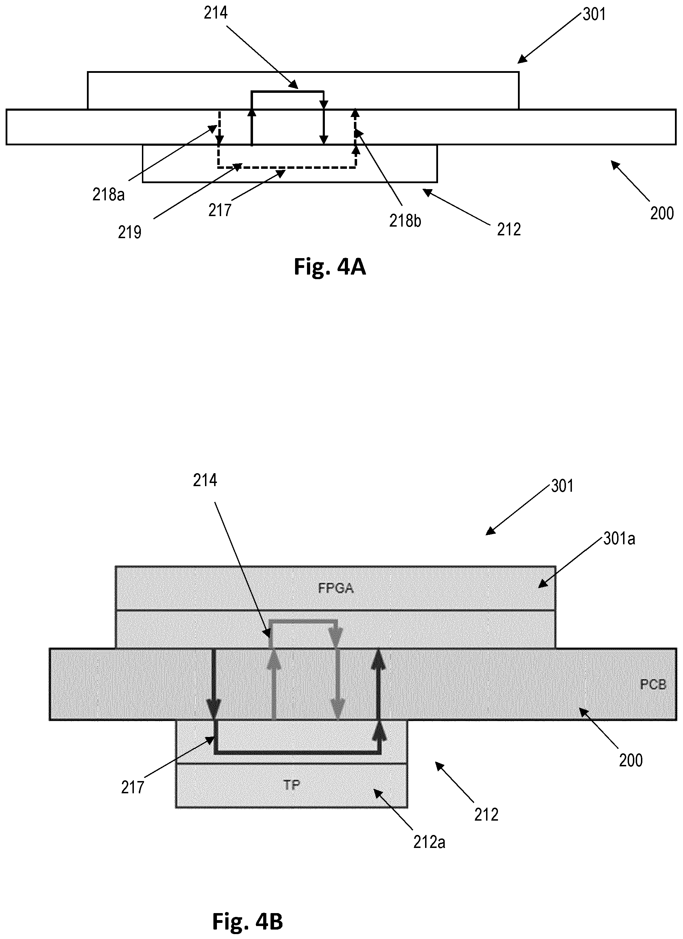

Figure 4A shows a schematic illustration of a cross-sectional view of a hardware security module (HSM) device according to another embodiment. In the hardware security module of Figure 4A, the device comprises a first tamper-detection link 214, corresponding to the tamper-detection link 214 described in relation to Figure 2B, and a second tamper-detection link 217.

The second tamper detection link 217 is also provided in the area of overlap between the tamper processor 212 and the main processor 301, as shown in Figure 4B. The second tamper detection link 217 connects to and from the main processor 301. The second tamper detection link 217 is provided through the circuit board and in the area inbetween the main processor 301 and the tamper processor 212.

The second tamper detection link 217 comprises a third connection 218a and a fourth connection 218b.

The third connection 218a of the second tamper detection link 217 is an electrically conductive path on the PCB 200. The third connection 218a comprises a third via hole. On the first surface of the PCB 200, the third via hole is electrically connected to a pad or trace on the first surface of the PCB 200. On the second surface of the PCB 200, the third via hole is electrically connected to a pad or trace on the second surface of the PCB 200.

The tamper processor 212 is mounted on the second surface of the PCB 200 such that a third input/output connection on the tamper processor 212 is electrically coupled to the third via hole. For example the third via hole is connected to a pad on the second surface of the PCB 200, and the pad is coupled to a third input output connection on the tamper processor 212. The connection is made directly using a solder joint or through one or more PCB traces. The main processor 301 is mounted on the first surface of the PCB 200 such that a first input/output connector on the main processor 301 is electrically coupled to the third via hole. For example, the third via hole is connected to a pad on the first surface of the PCB 200, and the pad is coupled to the first input/output connector on the main processor 301. The connection is made directly using a solder joint, or through one or more PCB traces. The third connection 218a comprising the third via hole provides a third electrically conductive connection between the tamper processor 212, provided on the second side of the printed circuit board 200, and the main processor 301 provided on the first surface of the printed circuit board 200.

The fourth connection 218b is an electrically conductive path on the PCB 200. The fourth connection 218b comprises a fourth via hole. On the first surface of the PCB 200, the fourth via hole is electrically connected to a pad or trace on the first surface of the PCB 200. On the second surface of the PCB 200, the fourth via hole is electrically connected to a pad or trace on the second surface of the PCB 200.

The tamper processor 212 is mounted on the second surface of the PCB 200 such that a fourth input/output connection on the tamper processor 212 is electrically coupled to the fourth via hole. For example the fourth via hole is connected to a pad on the second surface of the PCB 200, and the pad is coupled to a fourth input output connection on the tamper processor 212. The connection is made directly using a solder joint, or through one or more PCB traces. In this example, the main processor 301 is mounted on the first surface of the PCB 200 such that a second input/output connector on the main processor 301 is electrically coupled to the fourth via hole. For example, the fourth via hole is connected to a pad on the first surface of the PCB 200, and the pad is coupled to the second input/output connector on the main processor 301. The connection is made directly using a solder joint, or through one or more PCB traces. The fourth connection 218b comprising the fourth via hole provides a fourth electrically conductive connection between the tamper processor 212, provided on the second side of the printed circuit board 200, and the FPGA 301 provided on the first surface of the printed circuit board 200.

Again, one or both of the third via connection 218a and the fourth via connection 218b may comprise one or more blind or buried via connections, and internal traces within the PCB 200.

The third input/output connection on the tamper processor 212 and the fourth input/output connection on the tamper processor 212 are located between the chip and the PCB 200. They may be selected so as to be a certain distance apart, so as to provide a longer connection through the tamper processor 212.

The second tamper detection link 217 further comprises a tamper detection link part 219 through the tamper processor 212. In this example, the tamper detection link part 219 comprises the connection from the third input/output connection through the tamper processor 212 processing unit 402 and to the fourth input/output connection. In other words, the tamper detection link 214 comprises an input/output connection to and from the tamper processing unit 402.

In other words, the second tamper-detection link 217 comprises a bi-directional communication channel between the tamper processor 212 and the main processor 301. While the bi-directional communication channel is illustrated in the figure to comprise a third connection 218a and a fourth connection 218b, it should be understood that the channel may comprise a single connection or more than two connections depending on a communication protocol established between the tamper processor 212 and the main processor 301. Where the main processor 301 is a SOC FPGA, the connection may be made to the processing system 600 or to the programmable logic 606. In operation, the main processor 301 is configured to continuously send a pre-defined signal to the tamper-processor 212 and await a response from the tamper processor 212. For example, the tamper processor 212 is configured to copy the state on the third input/output connection to the fourth input/output connection. The tamper processor 212 processes the message from the main processor 301 in software, and generates a response to the message in software. Since the second detection link 217 is monitored when the HSM is powered on, power consumption is not such a consideration.

The main processor 301 is also configured to determine whether the received response corresponds to the expected response. The main processor 301 may also determine whether the response of the tamper processor 212 is received within an expected period of time. If the response of the tamper processor 212 is not received by the main processor 301 or a response different than the expected response is received from the tamper processor, the main processor may erase the cryptographic key material currently stored in the main processor 301 and/or stored in the non-volatile storage 208.

Furthermore, the main processor 301 may send a notification to the tamper processor 212 indicating that a tamper attempt has been detected. Upon receipt of the notification from the main processor 301, the tamper processor 212 may erase cryptographic key material stored in its internal memory. The notification may be sent on a secure channel provided between the main processor 301 and the tamper processor 212 as described above. Since the main processor 302 has erased its key material, it can't immediately securely request an erase at this point. However, the main processor 301 may use the device long term asymmetric keys to re-establish secure communication with the tamper processor 212, resulting in tamper processor 212 key part erasure.

The second tamper detection link 217 goes from and to the main processor 301. This link is active only when the HSM is powered. In this example, both the first tamper detection link 214 and the second tamper detection link 217 go via the silicon on both the main processor 301 and the tamper processor 212, so attempted removal of either the main processor 301 or the tamper processor 212 will be detected.

The main processor 301 and the tamper processor 212 process all of the sensitive material on the device. Any plaintext keys, such as the master key described above, may be stored so that part of the key material is stored on non-volatile memory on the main processor 301 and part of the key material is stored on non-volatile memory on the tamper processor 212. In other words, neither of the tamper processor 212 and the main processor 301 are cryptographically complete on their own. Each of the tamper processor 212 and the main processor 301 may erase its part of the key material, preventing the key material from being obtained. In particular, when the HSM is powered down, the main processor 301 is not cryptographically complete, meaning that only the material in the tamper processor 212 needs to be protected - erasure of this material is sufficient to render the HSM unable to recover the master key. No sensitive data is stored in non-volatile storage outside the main processor 301 or the tamper processor 212.

Although in the above described example, the mounting area of the tamper processor 212 is smaller than that of the main processor 301, in alternative examples, the mounting area of the tamper processor 212 is equal in size to or bigger than that of the main processor 301.

Although in the above described example, the tamper processor 212 is provided on the second surface of the PCB 200, in alternative examples the tamper processor 212 may be provided on the first surface of the printed circuit board 200 together with one or more other components and the main processor 301 may be provided on the back surface of the printed circuit board 200.

Although in the above described example, all of the mounting area of one component (the tamper processor 212) is contained within the mounting area of the other component (the main processor 301), in alternative examples, only part of the mounting area of one component is contained within only part of the mounting area of the other component.

In the above described examples, the main processor 301 comprises an FPGA. However, in alternative examples, the main processor 301 may be a Central Processing Unit (CPU), configured to perform basic arithmetic, logic, controlling, and Input/Output (I/O) operations specified by instructions in computer program code. An example of the main processor is an NXP T1042 processor. In this case, the internal structure of the main processor is fixed, that is to say that the internal circuitry of the processor utilised to perform the various operations is fixed and cannot be changed after the main processor is manufactured. In other words, the internal structure, i.e. the hardware, of the main processor is not configurable.

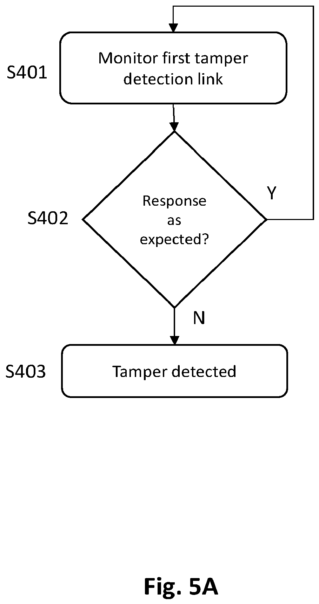

Figure 5A is a flow chart of a method of operation of a device according to an embodiment. The method of Figure 5A may be performed by the device of Figure 2A for example.

In S401, a tamper processor monitors a first tamper detection link. The tamper processor comprises a second chip and is mounted on a second side of a circuit board with an active surface of the second chip facing towards the circuit board. The first tamper detection link is provided through the circuit board and in the area of overlap between the tamper processor and a main processor comprising a first chip, wherein the main processor is mounted on a first side of the circuit board with an active surface of the first chip facing towards the circuit board, wherein the second side of the circuit board is opposite to the first side of the circuit board, wherein the tamper processor is mounted at least partially overlapping with the main processor.

In S402, it is determined whether there is an open circuit on the first tamper detection link. In this example, it is also detected whether there is a diode connected through the first tamper detection link 214. If so, in S403, a tamper is detected. The tamper processor may then erase cryptographic material stored on the tamper processor, for example the first part of a master key as described above. The tamper processor may send a notification to the main processor that a tamper has been detected.

If an open circuit is not detected, the tamper processor continues to monitor the first tamper detection link by returning to S401 and continuing from this point.

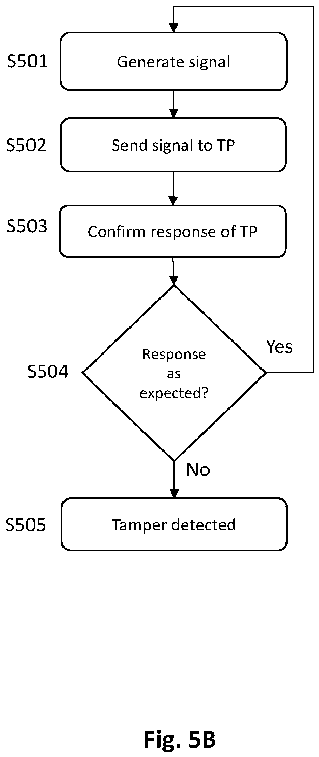

The tamper processor 212 provides continuous active tamper. If a tamper is detected, the tamper processor 212 enters an alarm state. Entering an alarm state causes the tamper processor 212 to erase its key part, along with erasure of any other sensitive material. On subsequent power up, the main processor 301 may enter an alarm state, for example upon detecting that the tamper processor 212 has erased its key part. Entering an alarm state causes the main processor 301 to erase its key part, along with erasure of all internal memories and reset of the processing unit 602. Figure 5B is a flow chart of a method of operation of a device according to an embodiment. The method of Figure 5B may be performed by the device of Figure 2A for example. The method of Figure 5B may be performed when the device is powered on, in addition to the method of Figure 5A, which is performed when the device is powered on and when the device is powered off.

In S501, the main processor generates a signal and in S502, the main processor sends the signal to the tamper processor. In S503, the main processor confirms the response of the tamper processor. If the response is as expected in S504, then the main processor generates a further signal in S501 and continues with the method from this point. A signal may be generated once every second for example. If the response is not as expected in S504, a tamper is detected in S505. In this case, the main processor may erase the cryptographic key material currently used by the main processor and stored in the non-volatile storage. Furthermore, the main processor may send a notification to the tamper processor indicating that a tamper attempt has been detected.

If the HSM is powered on when a tamper is detected, the main processor 301 enters an alarm state. Entering an alarm state causes the main processor 301 to erase its key part, along with erasure of all internal memories and reset of CPUs.

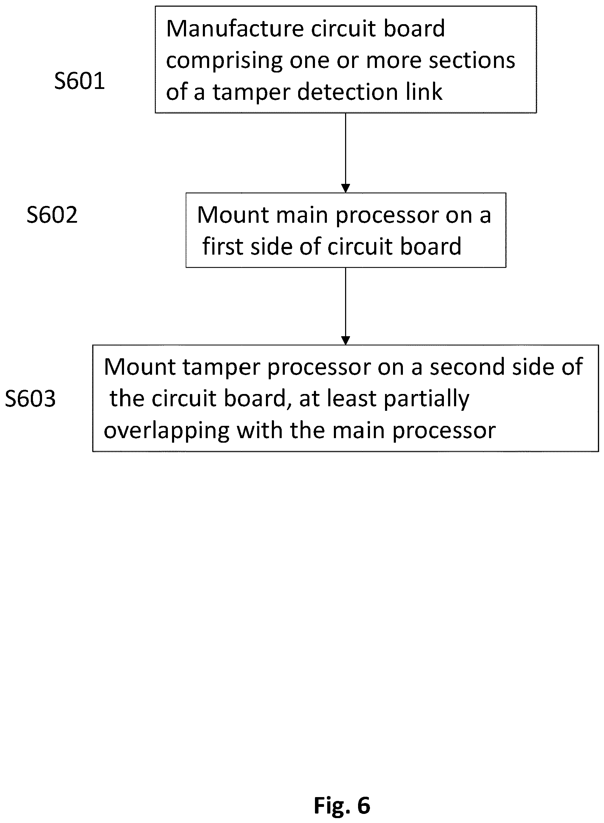

Different modes of active tamper protection may be used. The mode which is used by the HSM may be set at unit initialisation time, following a factory state operation. For example, in a first mode, user key material is erased upon detection of a tamper event, but factory set information such as warrants will remain intact. The HSM unit will be effectively factory-stated on a tamper, and can be re-set by the user. In a second mode, all key material is erased, including device warrants. The unit will need to be either replaced or returned following a tamper event. Figure 6 is a flow chart of a method of manufacturing a device according to an embodiment. The method may be used to manufacture the device of Figure 2A for example.

Step S601 comprises manufacturing a circuit board comprising one or more sections of a tamper detection link. An initial step of designing the PCB may be performed, in which the sections of the tamper detection link are specified. The PCB is then manufactured with the specified sections. In this example, the PCB is manufactured with the first connection 215a and the second connection 215b of the tamper detection link 214. In the example shown in Figure 2D, the first connection 215a comprises a first via hole 221a and a first trace 224a on the first surface of the PCB 200. The second connection 215b comprises a second via hole 221b and a second trace 224b on the first surface of the PCB 200. A conductive metal pad is formed on the second surface of the PCB coupled to the first via hole 221a and another conductive metal pad is formed on the second surface of the PCB coupled to the second via hole 221b. A conductive metal pad is formed on the first surface of the PCB coupled to the first trace 224a and another conductive metal pad is formed on the first surface of the PCB coupled to the second trace 224b. In the example shown in Figure 2E, the first connection 215a comprises the first via hole 221a, the first trace 224a and the third via hole 221c. The second connection comprises the second via hole 221b, the second trace 224b and the fourth via hole 221d. Step 602 may further comprise manufacturing the circuit board comprising one or more sections of a second tamper detection link such as described in relation to Figure 4A above.

Step S602 comprises mounting a main processor comprising a first chip on a first side of a PCB with an active surface of the first chip facing towards the PCB. In the example described here, the first chip is flip chip mounted within a package, which is then mounted on the PCB. The package may be mounted onto the PCB using solder joints. Alternatively, the first chip may be flip-chip mounted directly onto the PCB.

Step S603 comprises mounting a tamper processor comprising a second chip on a second side of the circuit board with an active surface of the second chip facing towards the circuit board, wherein the second side of the circuit board is opposite to the first side of the circuit board, and wherein the tamper processor is mounted at least partially overlapping with the main processor. In the example described here, the second chip is flip chip mounted within a package, which is then mounted on the PCB. The package may be mounted onto the PCB using solder joints. Alternatively, the second chip may be flip-chip mounted directly onto the PCB.

Mounting the main processor and the tamper processor comprises forming the first tamper detection link, wherein the first tamper detection link is provided through the circuit board and in the area of overlap between the main processor and the tamper processor. In this example, the main processor is mounted on the first surface of the PCB such that a first pin on the main processor is electrically coupled to the first connection. A second pin on the main processor is electrically coupled to the second connection. In the example of Figure 2D, the first connection comprises a first via hole 221a. The first via hole 221a is connected to a pad on the first surface of the PCB via a first trace 224a. The pad is soldered to the first pin on the main processor when the main processor is mounted on the PCB. The second connection comprises a second via hole 221b. The second via hole 221b is connected to a pad on the first surface of the PCB, and the pad is soldered to the second pin on the main processor when the main processor is mounted on the PCB. The tamper processor is mounted on the second surface of the PCB such that a first input/output connection on the tamper processor is soldered to a pad on the second surface of the PCB connected to the first via hole 221a and a second input/output connection on the tamper processor is electrically soldered to a pad on the second surface of the PCB coupled to the second via hole.

Optionally, mounting the main processor and the tamper processor may further comprise forming a second tamper detection link, the second tamper detection link provided through the circuit board and in the area inbetween the first processing component and the tamper detection processing component.

In the above described devices, flip chip packaging places the active side of the silicon in the main processor and the tamper processor facing the PCB, instead of the active side facing upwards. This means that to perform any probing onto the silicon, for example to defeat any chip-level tamper features, requires removal of the component or drilling through the PCB. Two components that require tamper protection are placed on opposite sides of the PCB, with tamper-detection connections routed through the PCB between the two components. The work function to gain access to the silicon surface of the components without triggering a tamper is increased. In particular, the PCB traces and via holes in the tamper detection mechanisms are provided in the small space between the two components, such that any attempt to move those components apart will break the tamper loop. This constrains the space that an adversary has to attempt to disable the tamper loop, which is required to obtain access to the active silicon of the components. In particular, it is difficult for an attacker to link-out sections of this tracking, in order to provide a space to access the protected items.

While certain embodiments have been described, these embodiments have been presented by way of example only, and are not intended to limit the scope of the invention as claimed. Indeed the novel methods and apparatus described herein may be embodied in a variety of other forms; furthermore, various omissions, substitutions and changes in the form of methods and apparatus described herein may be made.

## Claims

1. A device, comprising:
a circuit board;
a first processing component comprising a first chip, the first processing component mounted on a first side of the circuit board with an active surface of the first chip facing towards the circuit board;
a second processing component comprising a second chip, the second processing component mounted on a second side of the circuit board with an active surface of the second chip facing towards the circuit board, wherein the second side of the circuit board is opposite to the first side of the circuit board, wherein the second processing component is mounted at least partially overlapping with the first processing component; and
a first tamper detection link provided through the circuit board and in the area of overlap between the first processing component and the second processing component.

2. The device according to claim 1, wherein the second processing component is configured to monitor the first tamper detection link.

3. The device according to any preceding claim, wherein the second processing component is configured to store cryptographic material and to erase the cryptographic material in response to a detection on the first tamper detection link.

4. The device according to any preceding claim, further comprising a power component configured to power the second processing component.

5. The device according to any preceding claim, wherein the first tamper detection link comprises a first connection, a second connection and a conductive path on the first processing component.

6. The device according to claim 5, wherein the conductive path comprises a first pin, a second pin and a conductive connection between the first pin and the second pin on the first processing component.

7. The device according to claim 5, wherein the conductive path comprises a diode.

8. The device according to claim 5 or 6, wherein the second processing component is configured to detect an open circuit on the first tamper detection loop as indicating a tamper attempt.

9. The device according to any of claims 5 to 8, wherein the first connection comprises a first via hole in the circuit board and the second connection comprises a second via hole in the circuit board.

10. The device according to any preceding claim, wherein the first processing component comprises a Field Programmable Gate Array FPGA.

11. The device according to any preceding claim, wherein the first processing component is configured to erase cryptographic material in response to receiving an indication from the second processing component of a detection on the first tamper detection link.

12. The device according to any preceding claim, further comprising a second tamper detection link provided through the circuit board and in the area inbetween the first processing component and the second processing component.

13. The device according to claim 12, wherein the first processing component is configured to monitor the second tamper detection link.

14. A method of operation of a device, comprising:
monitoring a first tamper detection link using a second processing component comprising a second chip, the second processing component mounted on a second side of a circuit board with an active surface of the second chip facing towards the circuit board, wherein the first tamper detection link is provided through the circuit board and in the area of overlap between the second processing component and a first processing component comprising a first chip, wherein the first processing component is mounted on a first side of the circuit board with an active surface of the first chip facing towards the circuit board, wherein the second side of the circuit board is opposite to the first side of the circuit board, and wherein the second processing component is mounted at least partially overlapping with the first processing component.

15. A method of manufacturing a device comprising:
manufacturing a circuit board comprising one or more sections of a first tamper detection link;
mounting a first processing component comprising a first chip on a first side of the circuit board with an active surface of the first chip facing towards the circuit board;
mounting a second processing component comprising a second chip on a second side of the circuit board with an active surface of the second chip facing towards the circuit board, wherein the second side of the circuit board is opposite to the first side of the circuit board, and wherein the second processing component is mounted at least partially overlapping with the first processing component; wherein mounting the first processing component and the second processing component comprises forming the first tamper detection link, wherein the first tamper detection link is provided through the circuit board and in the area of overlap between the first processing component and the second processing component.
